# EUROPEAN PATENT APPLICATION

(11) **EP 0 927 629 A2**
(43) Date of publication of application: **07.07.1999**
(21) Application number: 98124747.1
(22) Date of filing: 28.12.1998
(51) Int. Cl.: B29D 30/36, B29D 30/46, B29C 53/66

(54) **Method and device for producing a reinforced component of a road vehicle tire**

(30) Priority: 30.12.1997 IT TO971151
(71) Applicant: Bridgestone Corporation, Tokyo 104-8340 (JP)
(72) Inventor: Siegenthaler, Karl J., 4133 Pratteln (CH)
(74) Representative: Jorio, Paolo

(57) **Abstract**

A reinforced tire component (2), defined by a strip (3) having a first longitudinal axis (6) and a reinforcing structure (4) defined by a number of cord portions (5) forming a first angle (A) with the first axis (6), is formed by winding at least one cord (26) about a core (35) in a first spiral (37) to form a tubular body (38) having a second longitudinal axis (10); the first spiral (37) having first turns (39) forming a second angle (B) with the second axis (10); and the tubular body (38) being cut along at least a second spiral (42) having second turns (43) forming with the first turns (39) a third angle (C) equal to the first angle (A).

## Description

The present invention relates to a method for producing at least one reinforced component of a road vehicle tire.

The method according to the present invention may be used for producing any reinforced component, and reference in the following description to reinforced tread plies is purely by way of a non-limiting example, for the sake of simplicity.

In all currently known tire manufacturing systems, a reinforced component such as a tread ply is normally formed from textile or metal cords, which, after various processing, are arranged parallel to one another to form the axial warp of a strip.

Such processing normally comprises a calendering operation in which both faces of the strip are coated with respective layers of rubber to form a rubber-coated strip in which the cords are arranged axially. The rubber-coated strip is then subjected to a cutting and splicing operation in which the strip is cut into portions in a cutting direction forming a given angle with the warp. For tread plies, the angle is, for example, other than 90°, and is substantially equal to 90° for other types of reinforced plies.

The resulting portions are then rotated 90°, and the original lateral ends of the portions are spliced to form a composite strip defining the reinforced component, in which the cords are arranged crosswise and generally form a given angle with the longitudinal axis of the composite strip.

The above method of forming a reinforced component is therefore highly expensive on account of the numerous operations involved in forming the composite strip. What is more, the composite strip comprises, as stated, a number of transverse splices, which may result in in-service vibration of the finished tire.

Another drawback of known reinforced components of the type described lies in each cord portion in the component originating from a respective cord of ideally infinite length, which is fed to the calender and has a "history" of its own with possibly nothing in common with the "history" of the adjacent cords. That is to say, containing a large number of independent cord portions in terms of age, composition (which cannot possibly be identical for all the cords), humidity, elastic characteristics, dimensions, etc., known reinforced components of the above type contain a large number of independent, and to some extent uncontrollable, variables making repetitive results extremely difficult to achieve.

A first step towards eliminating the above drawbacks is described in Patent US-A-5,174,939, which relates to a method of forming a reinforced component of a vehicle tire carcass, in particular a reinforced tread ply, whereby an elongated reinforcing element, preferably a cord generally coated with green elastomeric material, is fed on a plane and along a substantially sinusoidal path to form a reinforcing strip defined by a succession of straight, substantially parallel elongated reinforcing element portions joined successively to one another by curved end portions. The resulting reinforcing strip has straight elongated reinforcing element portions which may be inclined at any angle with respect to the longitudinal axis of the strip, and is fed to an extrusion unit, which applies a cover layer of green elastomeric material on at least one side of the reinforcing strip to form the desired reinforced component.

While successfully eliminating the aforementioned drawbacks, the above known method, mainly due to the presence of said curved end portions, fails to provide for relatively high-density distribution of the straight portions. What is more, the equipment required to maintain an orderly arrangement of the straight portions upstream from the extrusion unit is invariably complicated and expensive.

All the above drawbacks would appear to be eliminated by EP-A-0583613 and EP-A-0583614, which relate to methods of forming a spliceless annular tread belt defined by two annular reinforced plies arranged one inside the other and having oppositely-inclined reinforcing cords.

In the above two known methods, the belt is formed by winding a cord, coated with elastomeric material, about an annular core to form an annular tubular element, which is cut along two annular lines parallel to a longitudinal axis of the core to form the two annular reinforced plies.

While providing not only for eliminating all the drawbacks mentioned previously, but also for producing spliceless annular reinforced plies, the above two known methods have, at least for the time being, proved unsuitable for industrial application, on account of the complex high-cost equipment required to form an orderly winding of the coated cord about the annular core.

It is an object of the present invention to provide a method of producing a reinforced component for a road vehicle tire, which provides for eliminating the aforementioned drawbacks, and which, in particular, is cheap and easy to implement.

According to the present invention, there is provided a method for producing at least one reinforced component of a road vehicle tire; said component being in the form of a strip having a first longitudinal axis, and a reinforcing structure defined by a number of textile or metal cord portions adjacent and parallel to one another and forming a first given angle of O° to 90° with said first longitudinal axis; and the method comprising the steps of feeding at least one cord on to a core; winding said cord on said core in a first spiral to form a tubular body coaxial with said core and having a second longitudinal axis, said first spiral having first turns forming a second given angle with said second longitudinal axis; and cutting said tubular body to define said strip; characterized in that said tubular body is cut along at least a second spiral having second turns forming with said first turns a third angle equal to said first angle.

The present invention also relates to a device for producing at least one reinforced component of a road vehicle tire.

According to the present invention, there is provided a device for producing at least one reinforced component of a road vehicle tire; said component being in the form of a strip having a first longitudinal axis, and a reinforcing structure defined by a number of textile or metal cord portions adjacent and parallel to one another and forming a first given angle of O° to 90° with said first longitudinal axis; and the device comprising a supporting core having a second longitudinal axis; supply means for feeding at least one cord on to said core; winding means for winding said cord about said core in a first spiral to form a tubular body coaxial with said core, said first spiral having first turns forming a second given angle with said second longitudinal axis; and cutting means for cutting said tubular body to define said strip; characterized in that control and guide means are provided to guide said cutting means to cut said tubular body along at least a second spiral having second turns forming with said first turns a third angle equal to said first angle.

A number of non-limiting embodiments of the present invention will be described by way of example with reference to the accompanying drawings, in which:
Figures 1 to 4 show views in perspective, with parts removed for clarity, of a first preferred embodiment of the device according to the present invention in three successive operating positions;
Figures 5 and 6 respectively show a partially unwound view in perspective and a spread-out plan view of a reinforced ply produced on the Figure 1-4 device;
Figures 7 and 8 show views in perspective, with parts removed for clarity, of a second preferred embodiment of the device according to the present invention in three successive operating positions;
Figure 9 shows a partially unwound view in perspective of two reinforced plies produced on the Figure 7 and 8 device.

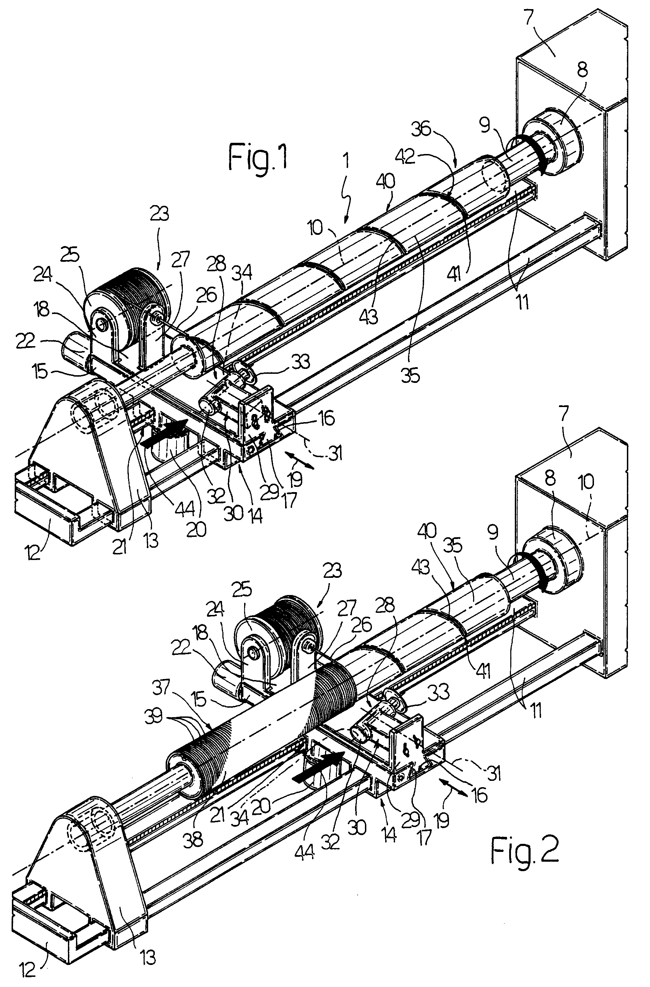

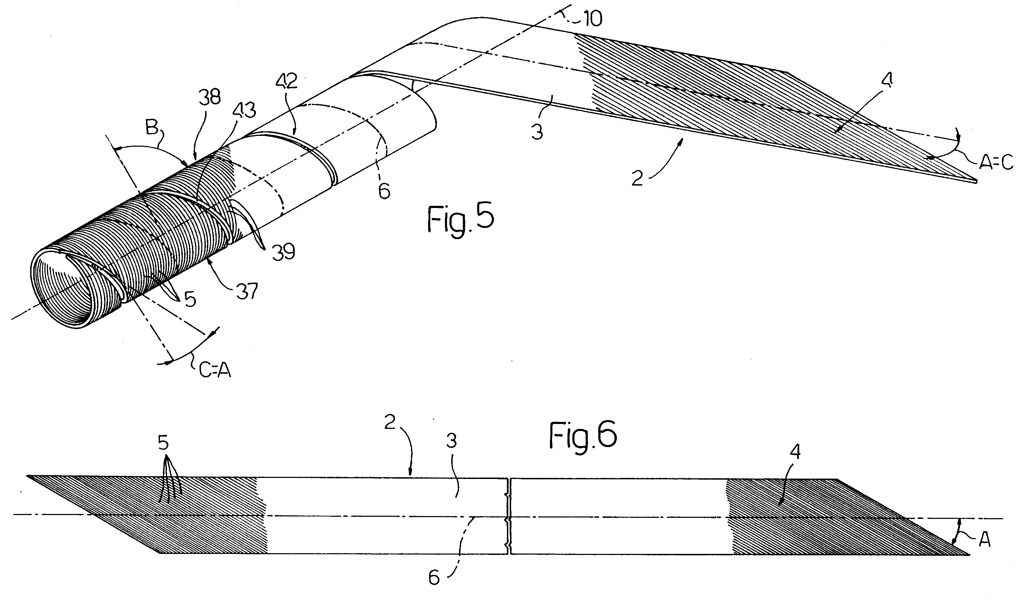

Number 1 in Figure 1 indicates as a whole a device for producing a reinforced ply 2 (Figure 6) of a road vehicle tire (not shown).

As shown more clearly in Figure 6, ply 2 is a tread ply defined by a strip 3 of elastomeric material having an inner reinforcing structure 4 defined by textile or metal cord portions 5 adjacent and parallel to one another and forming a given angle A of 0° to 90° with a longitudinal axis 6 of strip 3.

With reference to Figures 1 to 4, device 1 comprises a body 7 housing a motor 8, the output shaft 9 of which extends outwards of body 7 and rotates (clockwise in Figure 1) about a respective substantially horizontal axis 10.

Device 1 also comprises two guides 11, which are parallel to axis 10, lie in a substantially horizontal plane beneath axis 10, are symmetrical with respect to axis 10, and are connected by a cross member 12 at the respective ends opposite the ends connected to body 7.

Two slides forming part of device 1 are fitted in sliding manner to guides 11. One, indicated 13, may be fixed, by lock means not shown, to a given point of guides 11, and supports for rotation the free end of shaft 9; and the other, indicated 14, is mounted to slide along guides 11 in the space between slide 13 and body 7, and comprises a plate 15, which extends crosswise to guides 11, is connected in sliding manner to guides 11, and has, on the side facing shaft 9, a dovetail groove 16 extending parallel to the plane of guides 11 and crosswise to axis 10. Groove 16 is engaged in sliding manner by a bottom rib 17 of a slide 18 fitted to slide 14 so as to slide along a path 19 parallel to the plane of guides 11 and crosswise to axis 10. The travel of slide 14 along guides 11 is controlled by a reversible step motor 20 carried by plate 15 and connected to one of guides 11 by a rack-and-pinion coupling 21; and the travel of slide 18 along path 19 on plate 15 is controlled in known manner (not shown) by a further reversible step motor 22 carried by plate 15.

At a first end, slide 18 supports a supply device 23 comprising a fork 24 extending upwards from slide 18 and supporting for rotation a braking spool 25 wound with a given length of a textile or metal cord 26; and a cord-guide element 27 interposed between spool 25 and shaft 9. At the end opposite said first end and on the opposite side of shaft 9 to the first end, slide 18 supports a cutting device 28 comprising a bracket 29 extending upwards from slide 18; an arm extending from bracket 29 towards shaft 9 and connected adjustably to bracket 29 to define an angular adjusting device 30 about an axis 31 substantially perpendicular to axis 10; and a motor 32 connected to bracket 29 by adjusting device 30 and having an output shaft fitted with a circular blade 33 rotated by motor 32 about an axis 34 crosswise to path 19.

Shaft 9 is fitted with a cylindrical core 35, which, together with shaft 9 and motor 8, defines a winding device 36 for unwinding cord 26 off spool 25 and winding it about core 35 in a spiral 37 to form, as shown more clearly in Figure 5, a tubular body 38 coaxial with core 35. Spiral 37 comprises turns 39 forming with axis 10 a given angle B, generally close to 90°.

The outer cylindrical surface 40 of core 35 has a groove 41 (optional) winding about axis 10 in a spiral 42, which is oppositely inclined with respect to spiral 37, and comprises a succession of turns 43 forming with turns 39 of spiral 37 an angle C equal to angle A.

In actual use, shaft 9 is fitted with a core 35, the length and/or diameter of which vary according to the length of ply 2 to be formed, i.e. the diameter of the tire (not shown) of which ply 2 is to form part; and slide 18 is moved by motor 22 to position the periphery of blade 33 at a given distance from surface 40 of core 35.

One end of cord 26 - normally made of textile or metal material coated with green elastomeric material - is then unwound off spool 25 and pressed (Figure 1) on to the end of core 35 opposite the end facing motor 8; and motors 8 and 20 are started to rotate core 35, clockwise in Figures 1 to 4, about axis 10 and at the same time feed slide 14 along guides 11 along a path 44 parallel to axis 10.

As core 35 rotates about axis 10 and slide 14 moves simultaneously along path 44, cord 26 (Figure 2) is gradually wound in spiral 37 about axis 10. The speed at which slide 14 is fed forward by motor 20 is inversely proportional to the desired angle B, and slide 14 continues moving forward until spiral 37 reaches the end of core 35 facing motor 8 and tubular body 38 is complete.

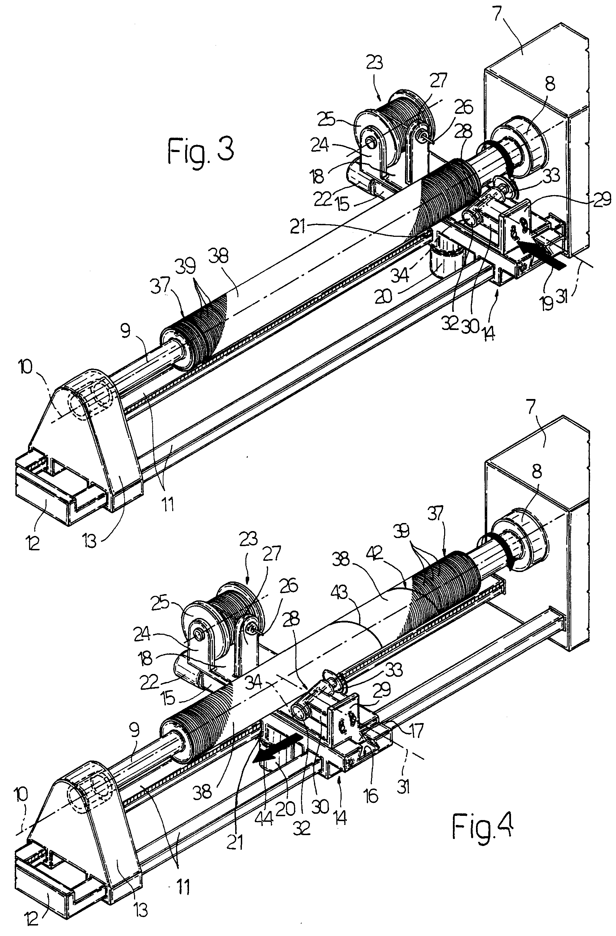

At this point, cord 26 is cut (Figure 3) by hand or by means of a known automatic cutting device (not shown), and motor 22 is activated to move slide 18 along path 19 until the periphery of blade 33 contacts surface 40 of core 35. If a groove 41 is provided, slide 18 is moved so that the periphery of blade 33 is positioned on a level with the bottom of groove 41 (Figure 3) and engages the start of groove 41 facing motor 8.

With core 35 still rotating about axis 10 and with slide 18 in the position described above, motor 20 is inverted to move slide 14 along path 44 towards slide 13 (Figure 4) and cut tubular body 38 along spiral 42. In this case, the speed imparted to slide 14 by motor 20 is directly proportional to the desired angle C=A.

Once cut along spiral 42, tubular body 38 is unwound off core 35 as shown in Figure 5 to obtain the ply 2 shown in Figure 6, which is already of the exact width and length for use in the formation of a tread belt (not shown).

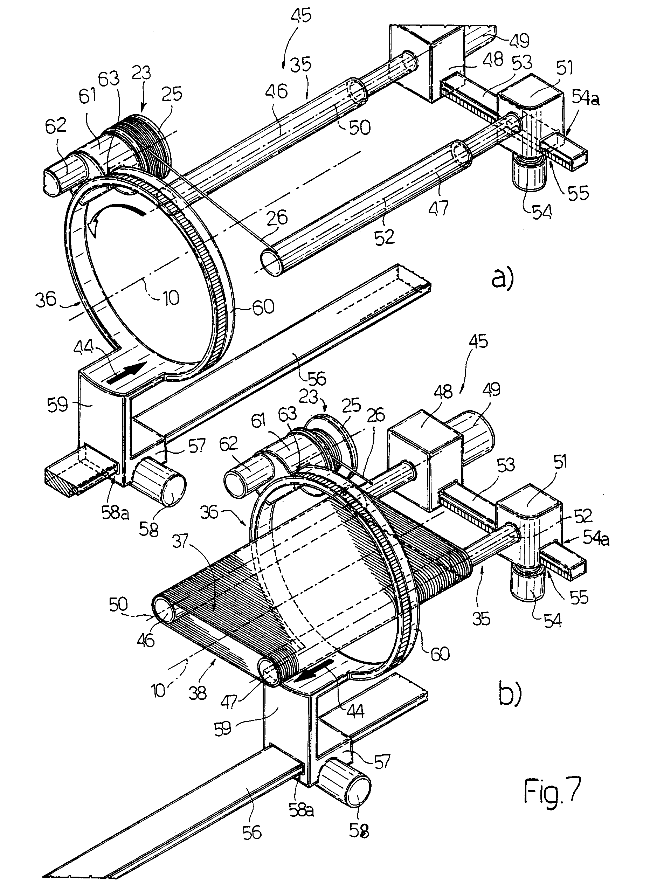

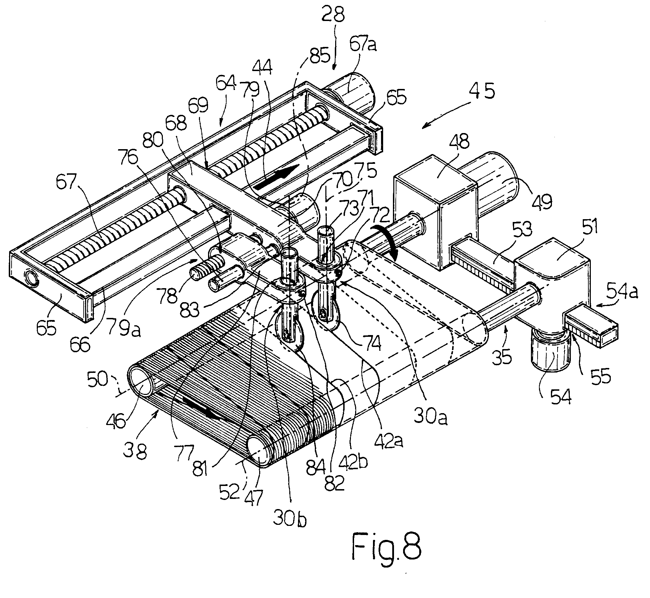

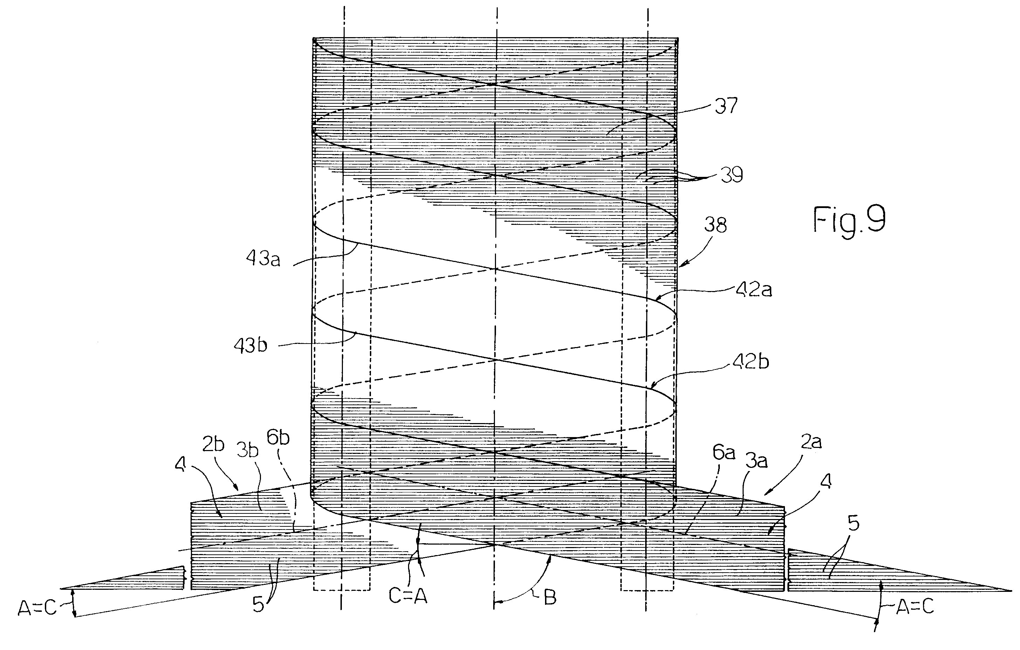

In the Figure 7 and 8 embodiment, number 45 indicates as a whole a device for producing at least two reinforced plies 2a and 2b (Figure 9) of a road vehicle tire (not shown), and which comprises a number of functional assemblies indicated, wherever possible, using the same numbering system as for the corresponding functional assemblies of device 1.

As shown in Figure 7, device 45, like device 1, comprises a core 35 having an axis 10 and for supporting a tubular body 38 defined by a cord 26 preferably coated with green elastomeric material and wound about core 35 in a spiral 37 defined by turns 39 forming an angle B with axis 10; a supply device 23; a winding device 36 for winding cord 26 about core 35 in a spiral 37; and a cutting device 28 (Figure 8) for cutting tubular body 38 along at least two spirals 42a and 42b.

As shown in Figure 9, spirals 42a and 42b comprise respective turns 43a and 43b, which form an angle C with turns 39 and define two tread plies 2a and 2b defined respectively by a strip 3a and a strip 3b. Each strip 3a, 3b has an inner reinforcing structure 4 defined by a succession of adjacent parallel portions 5 of cord 26 forming, with an axis 6a, 6b of respective strip 3a, 3b, an angle A equal to angle C.

As shown in Figure 7, core 35 of device 45 is defined by two parallel cylindrical rods 46 and 47 coplanar with and symmetrical with respect to axis 10. Rod 46 is a powered rod, which is supported for rotation by an end body 48, is connected to a motor 49, and is rotated by motor 49 about a respective axis 50. Rod 47 is an idle rod, which is supported by an end body 51, and rotates, with respect to body 51, about a respective axis 52 coplanar with axes 10 and 50. Body 51 is fitted to and moved along a guide 53 - carried by body 48 and extending perpendicular to axis 10 - by a motor 54 connected to guide 53 by a rack-and-pinion coupling 55, which, together with guide 53 and motor 54, defines an adjusting device 54a for adjusting the distance between rods 46 and 47.

Winding device 36 comprises a guide 56 extending beneath and parallel to axis 10; a slide 57 mounted to slide along guide 56 along a path 44 parallel to axis 10, and which is moved along guide 56 by a reversible step motor 58 connected to guide 56 by a rack-and-pinion coupling 58a; a bracket 59 projecting upwards from slide 57; and a ring 60 coaxial with axis 10, and having an inside diameter greater than a distance equal to the distance between axes 50 and 52 plus the diameter of one of rods 46, 47. Winding device 36 also comprises a slide 61 moved along ring 60 by a motor 62 connected to ring 60 by a rack-and-pinion coupling 63; and supply device 23 comprises a braking spool 25 mounted for rotation on slide 61 and wound with a given length of cord 26.

As shown in Figure 8, cutting device 28 comprises a substantially U-shaped frame 64, in turn comprising two wings 65 crosswise to axis 10 and supporting the opposite ends of a guide 66 parallel to axis 10, and the opposite ends of a screw 67 parallel to axis 10 and connected to the output of a reversible motor 67a carried by frame 64. A slide 68 is fitted in sliding manner to guide 66, is connected to screw 67 by a screw-nut screw coupling 69, and is moved along guide 66 along path 44 by motor 67a.

Slide 68 comprises a bracket 70 projecting from guide 66 over the plane defined by rods 46 and 47, and having, on the free end, a hole 71 in which is locked adjustably, by means of a screw 72, a pin 73 perpendicular to the plane of rods 46 and 47 and fitted with a rotary blade 74. Hole 71, screw 72 and pin 73 define an adjusting device 30a for adjusting the height of the axis of rotation of blade 74, by adjusting the length of pin 73 projecting beneath slide 68, and for also adjusting the angular position of the plane of blade 74 about an axis 75 of pin 73.

Two guide elements, parallel to axis 10, project laterally from slide 68 : a first, indicated 76, is a cylindrical pin to which is fitted in sliding manner a bracket 77; and the second, indicated 78, is a screw, which is controlled by a motor 79 carried by bracket 77, and is connected to bracket 77 by a screw-nut screw coupling 80. Pin 76, screw 78, motor 79 and coupling 80 define an adjusting device 79a for adjusting the distance between brackets 70 and 77.

Bracket 77 projects over the plane defined by rods 46 and 47 and alongside bracket 70, and has, on the free end, a hole 81 in which is locked adjustably, by means of a screw 82, a pin 83 perpendicular to the plane of rods 46 and 47 and fitted with a rotary blade 84. Screw 82, hole 81 and pin 83 define an adjusting device 30b for adjusting the height of the axis of rotation of blade 84, by adjusting the length of pin 83 projecting beneath bracket 77, and for also adjusting the angular position of the plane of blade 84 about an axis 85 of pin 83. Which adjustments are so made that blades 74 and 84 are always parallel to each other and at the same height.

In actual use, and as shown in Figure 7a, after activating motor 54 to set the required distance between rods 46 and 47, a portion of cord 26 is unwound, e.g. by hand, off spool 25 and connected to one of rods 46, 47, e.g. rod 47. Motor 62 is then activated to move slide 61 along ring 60 and about axis 10, and, at the same time, motor 58 is activated to move ring 60 along path 44 towards bodies 48 and 51 and wind cord 26 gradually in spiral 37 about both rods 46 and 47 to gradually form tubular body 38.

Once tubular body 38 is formed, cord 26 is cut either by hand or by means of a known automatic cutting device not shown (Figure 7b), and winding device 36 is moved along path 44, in the opposite direction to that in which winding device 36 is moved to form tubular body 38, to release rods 46 and 47 from ring 60 and enable engagement of tubular body 38 by cutting device 28.

With reference to Figure 8, cutting device 28 is originally located facing the free ends of rods 46 and 47, and, prior to use, is adjusted so that blades 74 and 84 are separated by a distance equal to the width of strips 3a and 3b to be formed. The height and inclination of blades 74 and 84 are then adjusted; motor 67a is activated to move blades 74 and 84 gradually towards bodies 48 and 51, and, at the same time, motor 49 is activated to rotate rod 46 about respective axis 50 and so move tubular body 38 about rods 46 and 47 in the opposite direction to that in which slide 61 is rotated about axis 10 along ring 60. Which two movements continue until body 38 is cut completely into two strips 3a and 3b, which may form the two plies 2a and 2b of the same tread belt (not shown).

In a variation (not shown), device 1, like device 45, is also provided with a number of cutting blades to simultaneously form a number of strips 3.

In a further variation (not shown), a mat is fitted over rods 46 and 47 of device 45; in which case, the winding device 36 shown in Figure 7 may be replaced by a winding device similar to device 36 shown in Figures 1 to 4.

## Claims

1. A method of producing at least one reinforced component (2) of a road vehicle tire; said component (2) being in the form of a strip (3) having a first longitudinal axis (6), and a reinforcing structure (4) defined by a number of textile or metal cord portions (5) adjacent and parallel to one another and forming a first given angle (A) of O° to 90° with said first longitudinal axis (6); and the method comprising the steps of feeding at least one cord (26) on to a core (35); winding said cord (26) on said core (35) in a first spiral (37) to form a tubular body (38) coaxial with said core (35) and having a second longitudinal axis (10), said first spiral (37) having first turns (39) forming a second given angle (B) with said second longitudinal axis (10); and cutting said tubular body (38) to define said strip (3); characterized in that said tubular body (38) is cut along at least a second spiral (42; 42a, 42b) having second turns (43; 43a, 43b) forming with said first turns (39) a third angle (C) equal to said first angle (A).

2. A method as claimed in Claim 1, characterized in that said second axis (10) is a substantially straight axis.

3. A method as claimed in Claim 2, characterized in that said core (35) is a substantially cylindrical core; said cord (26) being wound about said core (35) by connecting said cord (26) to said core (35), rotating said core (35) in a first given direction about said second longitudinal axis (10), and moving a supply device (23), for supplying said cord (26), in a second direction along a given path (44) parallel to said second axis (10) and at a speed inversely proportional to said second angle (B).

4. A method as claimed in Claim 3, characterized in that said tubular body (38) is cut by bringing a cutting device (28) into engagement with said tubular body (38), rotating the tubular body (38) about said second axis (10) in said first direction, and simultaneously moving said cutting device (28) along said second axis (10) along said given path (44) and in a direction opposite said second direction.

5. A method as claimed in Claim 4, characterized in that said tubular body (38) is rotated about said second axis (10) by rotating said core (35) about the second axis (10).

6. A method as claimed in Claim 2, characterized in that said core (35) is defined by two parallel rods (46, 47); said cord (26) being wound about said core (35) by connecting said cord (26) to said core (35), moving a supply device (23), for supplying said cord (26), in a first direction along a given path (44) parallel to said second axis (10) and at a speed inversely proportional to said second angle (B), and simultaneously rotating said supply device (23) about said core (35) and about said second axis (10) in a second given direction.

7. A method as claimed in Claim 6, characterized in that said tubular body (38) is cut by bringing a cutting device (28) into engagement with said tubular body (38), rotating the tubular body (38) about said second axis (10) in a direction opposite said second direction, and simultaneously moving said cutting device (28) along said second axis (10) along said given path (44) and in a direction opposite said first direction.

8. A method as claimed in Claim 7, characterized in that said tubular body (38) is rotated about said second axis (10) by rotating one (46) of said rods (46, 47) about its own axis (50).

9. A device for producing at least one reinforced component (2) of a road vehicle tire; said component (2) being in the form of a strip (3) having a first longitudinal axis (6), and a reinforcing structure (4) defined by a number of textile or metal cord portions (5) adjacent and parallel to one another and forming a first given angle (A) of O° to 90° with said first longitudinal axis (6); and the device (1; 45) comprising a supporting core (35) having a second longitudinal axis (10); supply means (23) for feeding at least one cord (26) on to said core (35); winding means (36) for winding said cord (26) about said core (35) in a first spiral (37) to form a tubular body (38) coaxial with said core (35), said first spiral (37) having first turns (39) forming a second given angle (B) with said second longitudinal axis (10); and cutting means (28) for cutting said tubular body (38) to define said strip (3); characterized in that control and guide means are provided to guide said cutting means (28) to cut said tubular body (38) along at least a second spiral (42; 42a, 42b) having second turns (43; 43a, 43b) forming with said first turns (39) a third angle (C) equal to said first angle (A).

10. A device as claimed in Claim 9, characterized in that said second longitudinal axis (10) is a substantially straight axis.

11. A device as claimed in Claim 9 or 10, characterized in that said supply means (23) comprise a spool (25) supporting a given supply of said cord (26).

12. A device as claimed in one of the foregoing Claims from 9 to 11, characterized in that said cutting means (28) comprise at least one blade (33; 74, 84) rotating about a third axis (34) and located in a given plane; and first adjusting means (30; 30a, 30b) for so adjusting said plane that the plane forms with said second axis (10) an angle differing from said third angle (C) by an angle equal to the second angle (B).

13. A device as claimed in Claim 12, characterized in that said cutting means (28) comprise at least two blades (74, 84) located side by side and separated by a given distance measured parallel to said second axis (10); and second adjusting means (79a) for adjusting said distance.

14. A device as claimed in one of the foregoing Claims from 9 to 13, characterized in that said core (35) is a cylindrical core (35) coaxial with said second axis (10).

15. A device as claimed in Claim 14, characterized in that said winding means (36) comprise first actuating means (8) for rotating said core (35) about said second axis (10); and second actuating means (20) for moving said supply means (23) along said second axis (10) and along a given path (44) parallel to the second axis (10).

16. A device as claimed in Claim 15, characterized by comprising a first and a second slide (14, 18), and first guide means (11) for guiding the first slide (14) along said second axis (10); the first slide (14) being moved along said first guide means (11) by said second actuating means (20); the second slide (18) being movable on the first slide (14) and crosswise to said second axis (10); third actuating means (22) being interposed between the first and the second slide (14, 18) to move the second slide (18) on the first (14); and said second slide (18) supporting said supply means (23) and said cutting means (28).

17. A device as claimed in one of the foregoing Claims from 9 to 13, characterized in that said core (35) comprises two rods (46, 47) parallel to each other and to said second axis (10), and located a given distance from each other and symmetrically with respect to the second axis (10).

18. A device as claimed in Claim 17, characterized by comprising third adjusting means (54a) for adjusting the distance between said two rods (46, 47).

19. A device as claimed in Claim 17 or 18, characterized in that both said rods (46, 47) are mounted for rotation about respective longitudinal axes (50, 52); at least one (46) of said rods (46, 47) being powered to rotate about its own axis (50) at a given angular speed.
